# EUROPEAN PATENT SPECIFICATION

(11) **EP 1 452 273 B1**
(45) Date of publication and mention of the grant of the patent: **26.04.2006**
(21) Application number: 03255609.4
(22) Date of filing: 09.09.2003
(51) Int. Cl.: B25B 1/10

(54) **A unit for adjusting clamping force for a vice**
Einheit zum Einstellen der Spannkraft für einen Schraubstock
Unité pour ajuster la force de serrage pour un étau

(30) Priority: 26.02.2003 KR 2003012034
(43) Date of publication of application: 01.09.2004
(73) Proprietor: Samchully Machinery Co., Ltd., Bucheon-si, Kyunggi-do 420-807 (KR)
(72) Inventor: Seo, Hong Suk, Kangseo-gu Seoul 157-010 (KR)
(74) Representative: Hale, Peter

(56) References cited:
- EP-A- 0 525 501
- EP-A- 0 582 792
- US-A- 3 902 707

## Description

The present invention relates to a unit for increasing clamping force for a vice which holds an object on a machine tool in position and to a unit for adjusting clamping force directed from a movable jaw of the vice to a fixed jaw thereof.

Conventionally, vices having units for increasing clamping force, especially vices having units for increasing clamping force by means of liquid pressure have been disclosed in JP-A-46-15400 and JP-B-63-41711 (closest state of the art). Each of the conventional vices comprises: a base frame fixed on a table of a machine tool; a fixed jaw provided on the base frame; a movable jaw provided to be slidable on the base frame; a screw axis in the form of a pipe provided in the base frame to be rotatable and slidable therein and connected to the movable jaw in a screwed type; a central axis fitted in the screw axis to be rotatable and slidable therein and connected to the screw axis through a clutch and a hydraulic unit for increasing clamping force; and a handle connected to one end of the central axis. If the resistance against the clamping force over the screw axis is within a certain range, the clutch connects the central axis and the screw axis and rotates them integrally. If the resistance is out of the certain range, however, the clutch releases the connection between the central axis and the screw axis and simultaneously drives the hydraulic unit for increasing clamping force by the sliding action of the central axis, thereby applying the clamping force directed from the movable jaw to the fixed jaw to the screw axis.

However, in the above conventional vice having the hydraulic unit for increasing clamping force, if a large external force was applied to the object fitted between the movable jaw and the fixed jaw, it happened that the hydraulic unit for increasing clamping force was instantaneously released and thus the object was deviated from the clamped position and taken out of the position on the vice. Especially in case of precision machining of objects, such deviation of objects could cause the deterioration of the quality of precision products and decrease the machining precision.

In addition, another conventional vice having a mechanical unit for increasing clamping force was disclosed in JP-B-63-53413. In this patent application, the vice can prevent the mechanical unit for increasing clamping force from being instantaneously released when a large external force is given on the objects. However, as each of driving rollers moves by means of the sliding contact, the frictional loss is large, and thus the efficiency of the clamping force with respect to the applied force decreases.

EP-A-0 525 501 discloses a clamp drive adapted for use as a machine vice.

To solve the above disadvantages of the conventional units for increasing clamping force a new unit for increasing clamping force for a vice is provided, which does not cause an object to be easily deviated or detached from the vice even if a large external force is applied to the object.

An object of the present invention is to provide a unit for adjusting clamping force for a vice, which can easily adjust the clamping force directed from the movable jaw to the fixed jaw, especially the force increased by the unit for increasing clamping force, depending on an object held between the movable jaw to the fixed jaw.

The present invention is set out in the independent claim. Some preferred features are set out in the claims dependent thereto.

The present invention relates to a unit for adjusting clamping force for a vice, which comprises:
a coupling part (110) having one end (110a) fitted into an elongated end (5a) of a screw axis (5) of the vice (B) and also having an axial opening (112) with a jaw (111) along its internal periphery;
an interval maintaining part (120) having an axial opening (123) in the center thereof and also having one end (120a) connected to the coupling part (110) via a space part (121) and the other end (120b) having a plurality of protrusions (122) at the same interval along its external periphery;
a central axis (130) having one end (130a) rotatably and slidably fitted into the axial opening (112) of the coupling part (110) and the other end (130b) rotatably and slidably fitted into the axial opening (123) of the interval maintaining part (120), and including a pressing part (131) with its one end being inserted into the one end (130a) of the central axis (130) and the other end hanging on the jaw (111) of the axial opening (112);
a guide axis (170) having one end (170a) inserted into a groove formed in the other end (110b) of the coupling part (110) and the other end (170b) inserted into a groove formed in the one end (120a) of the interval maintaining part (120);
a first clutch (140) fitted into one end surface (120a') of the interval maintaining part (120) and having a first stopper (141) protruded from one end surface (140a') thereof;
an adjusting knob (150) having one end (150a) externally fitted to the other end (110b) of the coupling part (110) and the other end (150b) externally fitted to the interval maintaining part (120) to be rotatable and slidable, and including a plurality of concaved parts (151) formed at the same interval along the internal periphery of the other end (150b) to be engaged with the protrusions (122) of the interval maintaining part (120) by an elastic support means (152) and also including female screw (153) formed in its internal surface facing the space part (121) between the coupling part (110) and the interval maintaining part (120); and
a second clutch (160) provided in the adjusting knob (150) to be movable along the guide axis (170) and including an axial opening (163) into which the central axis (130) is rotatably and slidably fitted, a guide opening (164) into which the guide axis (170) is slidably inserted, a second stopper (161) protruded from one end surface (160b') and releasably engaged with the first stopper (141) of the first clutch (140), and a male screw (162) engaged with the female screw (153) of the adjusting knob (150).

In the above-mentioned unit for adjusting clamping force for a vice, the elastic support means (152) comprises a concaved part (152a) formed in the other end (110b) of the coupling part (110) and including springs (152c) in a part thereof; a spring holding rod (152b) with one end fixed into the bottom of the concaved part (152a) and the other end fixed on the end surface (120a') of the interval maintaining part (120) through the second clutch (160); and the springs (152c) provided in the concaved part (152a) and on both sides of the holding rod (152b) in the space part (121).

In the unit for adjusting clamping force for a vice according to the present invention, it is preferable that a groove (133) is formed in the other end (130b) of the central axis (130) and a ball (135) is inserted in the groove (133) to be elastically supported by a ball spring (134). Also, it is preferable that the interval maintaining part (120) is provided with a control groove (124) in one side so that the ball (135) can be suspended on or released from the entrance of the control groove (124).

Further, it is preferable that an upwardly inclined surface (141a) in a clockwise direction is formed on an end surface of the first stopper (141) of the first clutch (140), and a downwardly inclined surface (161a) is formed on an end surface of the second stopper (161) of the second clutch (160) to be engaged with the upwardly inclined surface (141a).

It is also preferable that letters (125) indicating the distance between the first and the second clutches (140 and 160) step by step are engraved on the other end surface (120b') of the interval maintaining part (120), and grooves (154) indicating the engraved letters (125) are formed on the other end surface (150b') of the adjusting knob (150).

Furthermore, it is preferable that in order to prevent the adjusting knob (150) from being excessively rotated beyond a predetermined range of adjustment, a bar (155) is protruded from one end (150a) of the adjusting knob (150), and a finger bar (113a) is protruded from the other end (113b) of a protruding part (113) formed along the outside of the coupling part (110) so that the bar (155) can hang thereon..

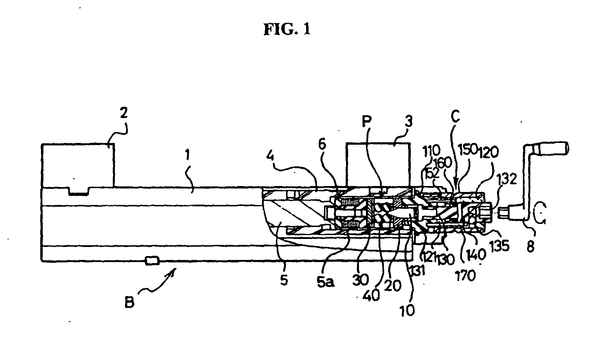

Referring to Fig. 1, the vice (B) according to the present invention comprises a base frame (1); a fixed jaw (2) mounted on the base frame (1); a slider (4) slidably affixed on the base frame (1); a movable jaw (3) mounted on the slider (4); the screw axis (5) mounted on the base frame (1) to be rotatable and slidable and connected to the slider (4) in a screwed type to move the movable jaw (3); a disk spring member (6) and the unit for increasing clamping force (P) fitted in the elongated end (5a) of the screw axis (5); the unit for adjusting clamping force (C); and a handle (8) connected to one end of the unit for adjusting clamping force (C).

Referring to Figs. 2 to 7, embodiments of the unit for increasing clamping force (P) will be described in detail.
Fig. 1 shows a vice including a unit for increasing clamping force and a unit for adjusting clamping force;
Fig. 2 is a perspective view of the unit for increasing clamping force according to a first embodiment ;
Fig. 3 is a sectional view taken along the line A-A of Fig. 2;
Fig. 4 is a disassembled perspective view showing procedures of assembling the unit for increasing clamping force;
Figs. 5 (a) and (b) are sectional views showing the states of operation of the unit for increasing clamping force;
Fig. 6 is a schematic sectional view of the unit for increasing clamping force according to a second embodiment;
Fig. 7 is a schematic sectional view of the unit for increasing clamping force according to a third embodiment ;
Figs. 8 (a) to (c) are sectional views of a unit for adjusting clamping force according to the present invention, wherein (a) shows the pre-operational state of the unit where a first clutch and a second clutch are engaged with each other, (b) shows the operational state of the unit where the first clutch and the second clutch are being disengaged by an adjusting knob, and (c) shows the post-operational state where the first clutch and the second clutch are disengaged;
Figs. 9 (a) and (b) are exploded perspective views of the adjusting knob in the unit for adjusting clamping force, wherein (a) shows the state where a fitting groove of the adjusting knob is engaged with a fitting protrusion of an interval maintaining part, and (b) shows the state where the fitting groove and the fitting protrusion are disengaged;
Fig. 10 is a right side view of the unit for adjusting clamping force; and
Figs. 11 (a) to (c) are exploded sectional views of the unit for adjusting clamping force, wherein (a) shows the pre-operational state of the unit where the first clutch and the second clutch are engaged with each other, (b) shows the post-operational state where the first and the second clutches are disengaged by the adjusting knob, and (c) shows the state where the unit for increasing clamping force is pressurised by the rotation and forward movement of a central axis until the first clutch is engaged with the second clutch.

### First Embodiment

The unit for increasing clamping force (P) comprises the first moving member (10), the holding member (20), the second moving member (30), the unit for increasing force (40) and the connecting means (50).

The first moving member (10) is formed to have an inward leading end in the shape of a wedge, i.e., the shape of a circular cone in this embodiment.

The holding member (20) is formed in the shape of a cylinder and provided with the hole (21) in the centre thereof, through which the first moving member (10) moves back and forth. The first and the second guide grooves (23A and 23B) are provided symmetrically centering around a diameter of a sectional surface of the holding member (20) and are formed in parallel on one end surface of the holding member (20). Between the first and second guide grooves (23A and 23B), the first and the second inwardly inclined planes (24A and 24B) are provided along the diameter toward the hole (21).

The second moving member (30) is substantially in the form of a cylinder, and has the third and the fourth guide grooves (33A and 33B) formed in parallel on one end surface thereof to be in opposite to the first and second guide grooves (23A and 23B). The third and the fourth guide grooves (33A and 33B) are also provided symmetrically centering around a diameter of a sectional surface of the second moving member (30).

The unit for increasing force (40) is provided between the holding member (20) and the second moving member (30) to be slidable and rollable along the first to fourth guide grooves (23A, 23B, 33A and 33B), and comprises the first and the second slide bodies (41 and 42) and the first and the second groups of rollers (45 and 46).

The first slide body (41) comprises the first and the second guide plates (41A and 41B), each of which has two U-shaped open bores (a, a) on its upper end and two circular bores (b, b) on its lower part, and which are overlapped in opposite directions to each other so that the two open bores (a, a) of the first guide plate (4 1 A) can be communicated with the two circular bores (b, b) of the second guide plate (41B), and the two circular bores (b, b) of the first guide plate (41A) can be communicated with the two open bores (a, a) of the second guide plate (41B). The U-shaped open bore (a) and the circular bore (b) of each of the first and the second guide plates (41 A and 41B) in communication with each other are referred to as "the first communicated bores".

The second slide body (42) comprises the third and the fourth guide plates (42A and 42B), each of which has two U-shaped open bores (a, a) on its upper end and two circular bores (b, b) on its lower part, and which are overlapped in opposite directions to each other so that the two open bores (a, a) of the third guide plate (42A) can be communicated with the two circular bores (b, b) of the fourth guide plate (42B), and the two circular bores (b, b) of the third guide plate (42A) can be communicated with the two open bores (a, a) of the fourth guide plate (42B). The U-shaped open bore (a) and the circular bore (b) of each of the third and the fourth guide plates (42A and 42B) in communication with each other are referred to as "the second communicated bores".

The first group of rollers (45) comprises the front upper roller (45A) having the rotary axis (45a) on each of both end surfaces and the rear upper roller (45B) having the rotary axis (45b) on each of both end surfaces, and they are rotatably and slidably provided between the first and the second slide bodies (41 and 42).

Specifically, the front upper roller (45A) has one side of the rotary axis (45a) rotatably fitted in the front circular bore (b) of the second guide plate (41B) and slidably fitted in the front open bore (a) of the first guide plate (41A) and has the other side of the rotary axis (45a) rotatably fitted in the front circular bore (b) of the third guide plate (42A) and slidably fitted in the front open bore (a) of the fourth guide plate (42B).

The rear upper roller (45B) has one side of the rotary axis (45b) rotatably fitted in the rear circular bore (b) of the second guide plate (41B) and slidably fitted in the rear open bore (a) of the first guide plate (41A) and has the other side of the rotary axis (45b) rotatably fitted in the rear circular bore (b) of the third guide plate (42A) and slidably fitted in the rear open bore (a) of the fourth guide plate (42B).

The second group of rollers (46) comprises the front lower roller (46A) having the rotary axis (46a) on each of both end surfaces and the rear lower roller (46B) having the rotary axis (46b) on each of both end surfaces, and they are rotatably and slidably provided between the first and the second slide bodies (41 and 42).

Specifically, the front lower roller (46A) has one side of the rotary axis (46a) rotatably fitted in the front circular bore (b) of the first guide plate (41A) and slidably fitted in the front open bore (a) of the second guide plate (41B) and has the other side of the rotary axis (46a) rotatably fitted in the front circular bore (b) of the fourth guide plate (42B) and slidably fitted in the front open bore (a) of the third guide plate (42A).

The rear lower roller (46B) has one side of the rotary axis (46b) rotatably fitted in the rear circular bore (b) of the first guide plate (41 A) and slidably fitted in the rear open bore (a) of the second guide plate (41B) and has the other side of the rotary axis (46b) rotatably fitted in the rear circular bore (b) of the fourth guide plate (42B) and slidably fitted in the rear open bore (a) of the third guide plate (42A).

All the rollers (45A, 45B, 46A and 46B) have the same diameter.

A pair of the connecting means (50) are provided on both sides of the hole (21) of the holding member (20) to connect the holding member (20) with the second moving member (30), so that the second moving member (30) can approach the holding member (20) or withdraw therefrom. Each of the connecting means (50) comprises the through hole (51) having the jaw (51a) along its internal periphery; the bolt (52) inserted into the through hole (51); spring members (53) provided between the jaw (51a) of the through hole (51) and the head (52a) of the bolt (52); and the recess (54) provided in one end surface of the second moving member (30) and threaded along its internal periphery to be engaged with an end of the bolt (52).

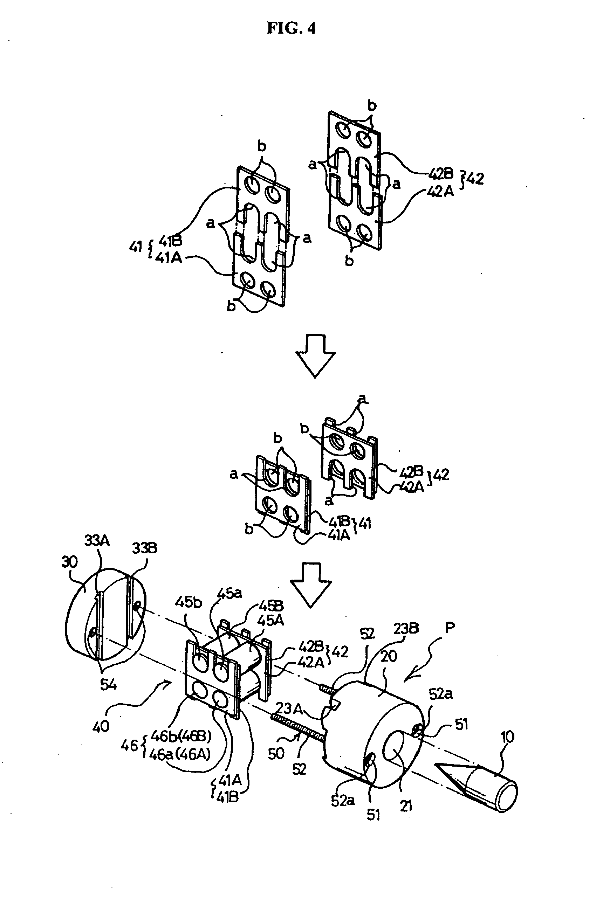

Referring to Fig. 4, procedures of assembling the unit for increasing clamping force will be described.

First of all, the first guide plate (41 A) and the second guide plate (41 B) are overlapped in opposite directions to each other to form the first slide body (41), and the third guide plate (42A) and the fourth guide plate (42B) are overlapped in opposite directions to each other to form the second slide body (42).

Then, the first group of rollers (45) and the second group of rollers (46) are axially disposed between the first slide body (41) and the second slide body (42). Specifically, each of the rotary axes (45a, 45b, 46a, 46b) on one end surface of each of the rollers (45A, 45B, 46A, 46B) is respectively fitted into the four first communicated bores formed in the first slide body (41), and simultaneously each of the rotary axes (45a, 45b, 46a, 46b) on the other end surface of each of the rollers (45A, 45B, 46A, 46B) is respectively fitted into the four second communicated bores formed in the second slide body (42), so that the unit for increasing clamping force (40) is assembled as in Fig. 4.

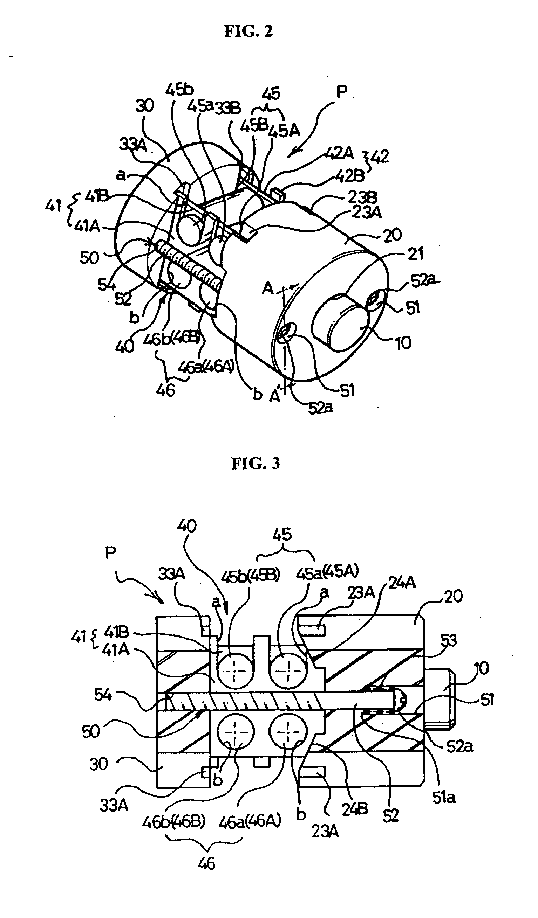

In order to dispose the unit for increasing clamping force (40) between the holding member (20) and the second moving member (30), the first slide body (41) is slidably fitted in the first guide groove (23A) of the holding member (20) and the third guide groove (33A) of the second moving member (30), and simultaneously the second slide body (42) is slidably fitted in the second guide groove (23B) of the holding member (20) and the fourth guide groove (33B) of the second moving member (30). At this time, the bolts (52) fitted in the through holes (51) with the spring members (53) inserted therein are coupled with the recess (54) in a screwed type, as shown in Figs. 2 and 3.

Then, as shown in Fig. 3, the second moving member (30) moves toward the holding member (20) by the elasticity of the spring members (53).

Accordingly, the front upper roller (45A) of the first group of rollers (45) rollably moves along the first inclined plane (24A), and sequentially the second and the third guide plates (41B and 42A) fitted to both the rotary axes (45a, 45a) of the front upper roller (45A) slidably move along the first and the third guide grooves (23A and 33A) and along the second and the fourth guide grooves (23B and 33B), by which the rear upper roller (45B) fitted to second and the third guide plates (41B and 42A) rollably moves in the same direction.

Simultaneously, the front lower roller (46A) of the second group of rollers (46) rollably moves along the second inclined plane (24B), and sequentially the first and the fourth guide plates (41A and 42B) fitted to both the rotary axes (46a, 46a) of the front lower roller (46A) slidably move along the first and the third guide grooves (23A and 33A) and along the second and the fourth guide grooves (23B and 33B), by which the rear lower roller (46B) fitted to first and the fourth guide plates (41 A and 42B) rollably moves in the same direction.

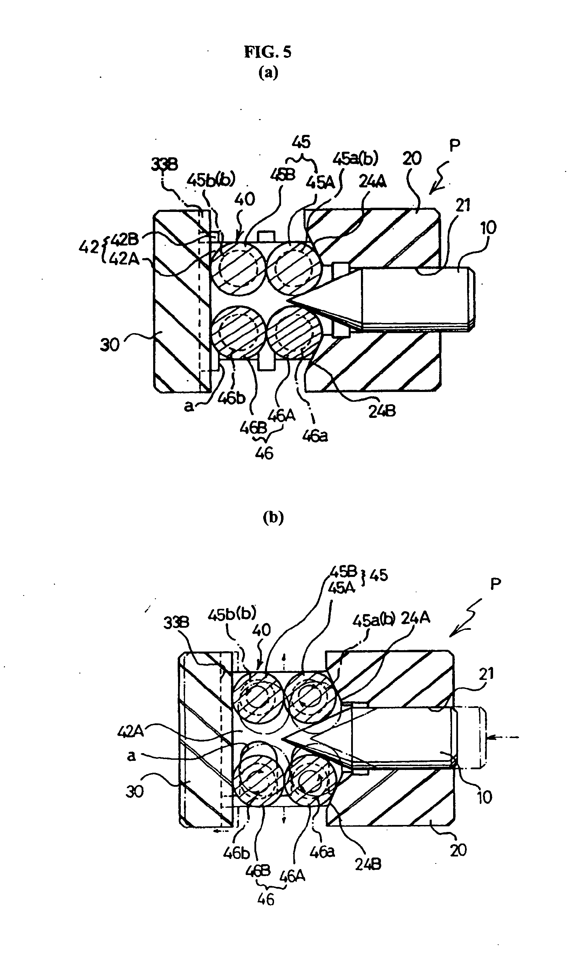

Referring to Figs. 3 and 5a, the rolling movement of the front and rear upper rollers (45A and 45B) and the front and rear lower rollers (46A and 46B) in the approaching direction to each other, and the sequential sliding movement of the first guide plate (41A) and the second guide plate (41 B) in a crossed direction and of the third guide plate (42A) and the fourth guide plate (42B) in a crossed direction are carried out until both the rotary axes (45a, 45b, 46a or 46b) of each of the rollers (45A, 45B, 46A, 46B) are in contact with the internal periphery of the open bores (a, a, a, a) of each of the corresponding guide plates (41 A, 41 B, 42A, 42B).

Finally, by fitting the first moving member (10) into the hole (21) of the holding member (20) so that the cone-shaped leading end of the first moving member (10) can be fitted between the front upper roller (45A) and the front lower roller (46A), the assembly of the unit for increasing clamping force (P) is completed.

The unit for increasing clamping force (P) assembled as above is mounted in the vice (B) by being fitted into the elongated end (5a) of the screw axis (5).

The operation of the unit for increasing clamping force (P) according to the first embodiment will be described hereinafter.

An object to be processed is placed on the base frame (1) of the vice (B). By rotating the handle (8), the screw axis (5) is rotated and the movable jaw (3) advances forward to the fixed jaw (2) on the slider (4), whereby the object is temporarily held between the movable jaw (3) and the fixed jaw (2).

If the handle (8) is further rotated, the central axis (130) of the unit for adjusting clamping force (C) is rotated and advanced forward, thereby pressing the first moving member (10) of the unit for increasing clamping force (P) to move forward.

Then, as shown in Fig. 5b, by the insertion of the cone-shaped leading end of the first moving member (10) between the front upper roller (45A) and the front lower roller (46A), the rollers (45A and 46A) are pushed away.

Therefore, the front upper roller (45A) rollably moves to the outside along the inclined plane (24A) of the holding member (20), and sequentially the second and the third guide plates (41B and 42A) fitted to both the rotary axes (45a, 45a) of the front upper roller (45A) slidably move along the first and the third guide grooves (23A and 33A) and along the second and the fourth guide grooves (23B and 33B), by which the rear upper roller (45B) fitted to second and the third guide plates (41B and 42A) rollably moves in the same direction.

Simultaneously, the front lower roller (46A) rollably moves to the outside along the second inclined plane (24B), and sequentially the first and the fourth guide plates (41A and 42B) fitted to both the rotary axes (46a, 46a) of the front lower roller (46A) slidably move along the first and the third guide grooves (23A and 33A) and along the second and the fourth guide grooves (23B and 33B), by which the rear lower roller (46B) fitted to first and the fourth guide plates (41A and 42B) rollably moves in the same direction.

As described above, as the second moving member (30) moves away from the holding member (20), the distance between the second moving member (30) and the holding member (20) increases, and thus the overall length of the unit for increasing clamping force (P) becomes long. Therefore, the clamping force of the movable jaw (3) against the fixed jaw (2) can be increased as much as the increased length of the unit for increasing clamping force (P), and thus the object temporarily held between the fixed jaw (2) and the movable jaw (3) can be held more strongly.

Further, as each of the rollers (45A, 45B, 46A and 46B) rollably moves through the first and the second slide bodies (41 and 42) which hold the rollers (45A, 45B, 46A and 46B), there is little frictional loss. Therefore, the operational force of the first moving member (10) can be sufficiently transferred to the second moving member (30) by the rolling movement of the rollers (45A, 45B, 46A and 46B), and as a result the clamping force of the movable jaw (3) against the fixed jaw (2) can be efficiently increased.

After the object is processed, the handle (8) backlashes so that the movable jaw (3) moves backward. Then, the force of elastic restitution of the spring members (53) moves the second moving member (30) toward the holding member (20) and simultaneously the rolling movement of the front and rear upper rollers (45A and 45B) and the front and rear lower rollers (46A and 46B) in the approaching direction to each other moves the first moving member (10) backward. Thus, the unit (P) returns to its original state as shown in Fig. 5a.

Alternatively, it can be designed that the holding member (20) can approach the second moving member (30) and withdraw therefrom.

### [Second Embodiment]

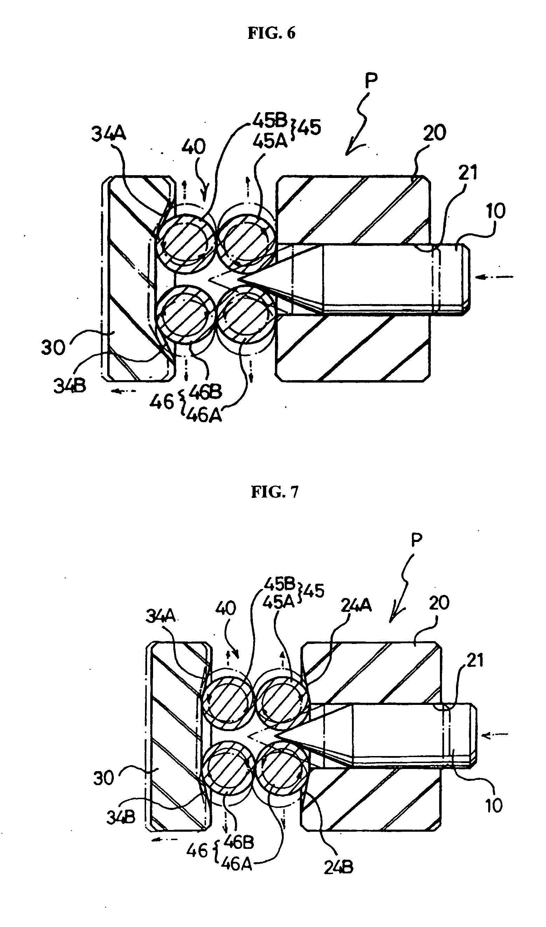

Referring to Fig. 6, the unit for increasing clamping force (P) according to the second embodiment has the same constitution as that of the first embodiment, with the exception that the inclined planes (34A and 34B) are formed in the second moving member (30), not in the holding member (20). Thus, the same reference numerals will be used for the same parts and members as those in the first embodiment, and the same description will be omitted herein.

As shown in Fig. 6, the holding member (20) is formed in the shape of a substantially cylinder and provided with the hole (21) in the center thereof, through which the first moving member (10) moves back and forth. The first and the second guide grooves (23A and 23B) are provided symmetrically centering around a diameter of a sectional surface of the holding member (20) and are formed in parallel on one end surface of the holding member (20).

The second moving member (30) is substantially in the form of a cylinder, and has the third and the fourth guide grooves (33A and 33B) formed in parallel on one end surface thereof to be in opposite to the first and second guide grooves (23A and 23B). Between the third and the fourth guide grooves (33A and 33B), the third and the fourth inwardly inclined planes (34A and 34B) are formed along both the radius of the diameter.

The operation of the unit for increasing clamping force (P) constituted as above is the same as in the first embodiment.

### [Third Embodiment]

Referring to Fig. 7, the unit for increasing clamping force (P) according to the third embodiment has the same constitution as that of the first or second embodiment, with the exception that the inclined planes (24A and 24B) are formed in the holding member (20) and the inclined planes (34A and 34B) are also formed in the second moving member (30). Thus, the same reference numerals will be used for the same parts and members as those in the first embodiment, and the same description will be omitted herein.

As shown in Fig. 7, the holding member (20) is formed in the shape of a substantially cylinder and provided with the hole (21) in the center thereof, through which the first moving member (10) moves back and forth. The first and the second guide grooves (23A and 23B) are provided symmetrically centering around a diameter of a sectional surface of the holding member (20) and are formed in parallel on one end surface of the holding member (20). Between the first and second guide grooves (23A and 23B), the first and the second inwardly inclined planes (24A and 24B) are formed along the diameter toward the hole (21).

Further, the second moving member (30) is substantially in the form of a cylinder, and has the third and the fourth guide grooves (33A and 33B) formed in parallel on one end surface thereof to be in opposite to the first and second guide grooves (23A and 23B). Between the third and the fourth guide grooves (33A and 33B), the third and the fourth inwardly inclined planes (34A and 34B) are formed in opposite to the first and second inwardly inclined planes (24A and 24B).

The unit for increasing clamping force (P) constituted as above has the same acting effect as in the first and the second embodiments, and additionally it can make the rolling movement very smoothly, since the front and rear upper rollers (45A and 45B) and the front and rear lower rollers (46A and 46B) move in a symmetrical way when they rollably move to the outside.

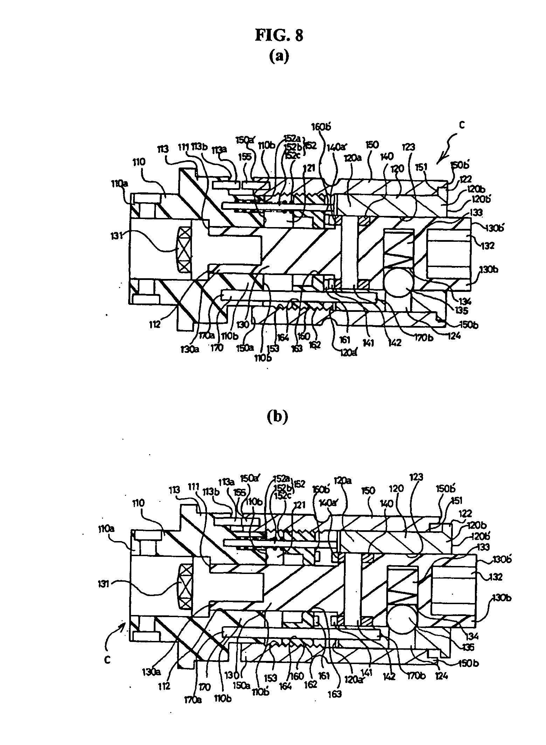

Referring to Figs. 8 to 11, embodiments of the unit for adjusting clamping force (C) for a vice will be described.

The unit for adjusting clamping force (C) generally comprises the coupling part (110), the interval maintaining part (120), the central axis (130), the first clutch (140), the adjusting knob (150), the second clutch (160) and the guide axis (170).

The coupling part (110) has one end (110a) fitted into the elongated end (5a) of the screw axis (5) and also has the axial opening (112) with a jaw (111) along its internal periphery. One end (130a) of the central axis (130) is slidably and rotatably fitted in the axial opening (112), and the pressing part (131) which hangs on the jaw (111) is inserted into the one end (130a) of the central axis (130).

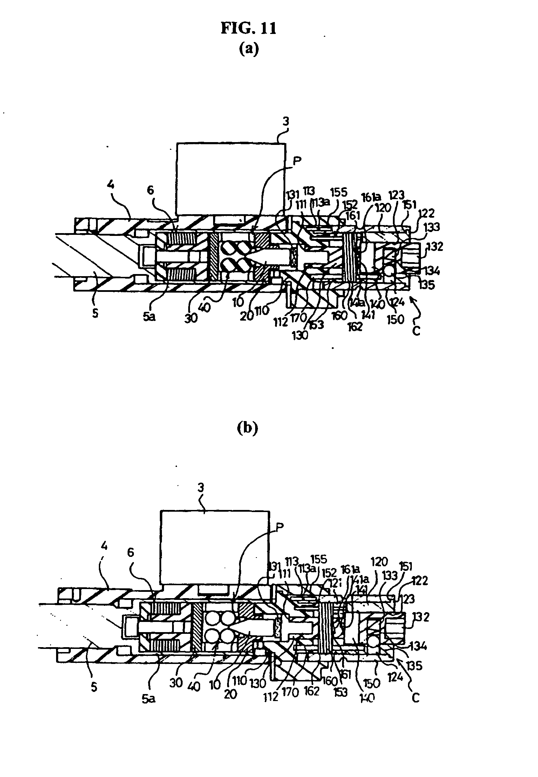

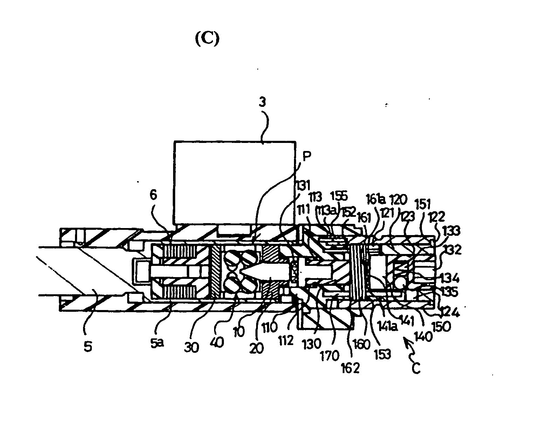

As shown in Figs. 1 and 11, the first moving member (10) of the unit for increasing clamping force (P) is inserted into the axial opening (112) formed at one end (110a) of the coupling part (110), and it is positioned to be in contact with the pressing part (131).

To the other lower end (110b) of the coupling part (110), one end (170a) of the guide axis (170) is fitted, and the other end (170b) is fitted into a groove formed in one end (120a) of the interval maintaining part (120), passing through the axial opening (163) of the second clutch (160). Thus, the space part (121) is formed between the coupling part (110) and the interval maintaining part (120).

The interval maintaining part (120) has the axial opening (123) through which the other end (130b) of the central axis (130) is rotatably and slidably inserted, and the other end (130b) of the central axis (130) is provided with a groove for receiving the handle (132) in the shape of hexagon.

The central axis is rotatably and slidably fitted into the axial opening (112) of the coupling part (110), the axial opening (163) of the second clutch (160) and the axial opening (123) of the interval maintaining part (120), so that it can move back and forth by the rotation of the handle (8).

That is, if the handle (8) is rotated after the hexagonal protrusion of the handle (8) is inserted in the groove (132), the central axis (130) rotates and moves back and forth, which pressurizes or releases the first moving member (10) of the unit for increasing clamping force (P) through the pressing part (131).

The other end (130b) of the central axis (130) is provided with the groove (133) and the ball (135) is inserted in the groove (133) to be elastically supported by the ball spring (134). Also, the interval maintaining part (120) is provided with the control groove (124) in one side so that the ball (135) can be suspended on or released from the entrance thereof.

As the ball (135) is normally suspended on the control groove (124), if the ball (135) resiliently resisting against the ball spring (134) is pushed into the groove (133) of the central axis (130) by the rotational force of the handle (8), the central axis (130) rotates and moves back and forth.

One end (120a) of the interval maintaining part (120) is connected to the coupling part (110) via the space part (121) and the other end (120b) has a plurality of protrusions (122) at the same interval along its external periphery.

The other end (150b) of the adjusting knob (150) is externally fitted to the interval maintaining part (120) to be slidable and rollable, and includes a plurality of concaved parts (151) formed along its internal periphery at the same interval to be engaged with the protrusions (122) of the interval maintaining part (120) by the elastic support means (152).

Further, one end (150a) of the adjusting knob (150) is externally fitted to the other end (110b) of the coupling part (110) to be slidable and rollable.

The adjusting knob (150) also includes the female screw (153) in its internal surface facing the space part (121) between the coupling part (110) and the interval maintaining part (120).

The adjusting knob (150) is elastically supported against the interval maintaining part (120) by the elastic support means (152) so that the protrusions (122) can always be engaged with the concaved parts (151).

The second clutch (160) is connected with the adjusting knob (150) in a screwed type and it has the male screw (162) engaged with the female screw (153) of the adjusting knob (150) along its external periphery and also has the second stopper (161) engaged with the first stopper (141) of the first clutch (140) on the other end surface (160b') thereof.

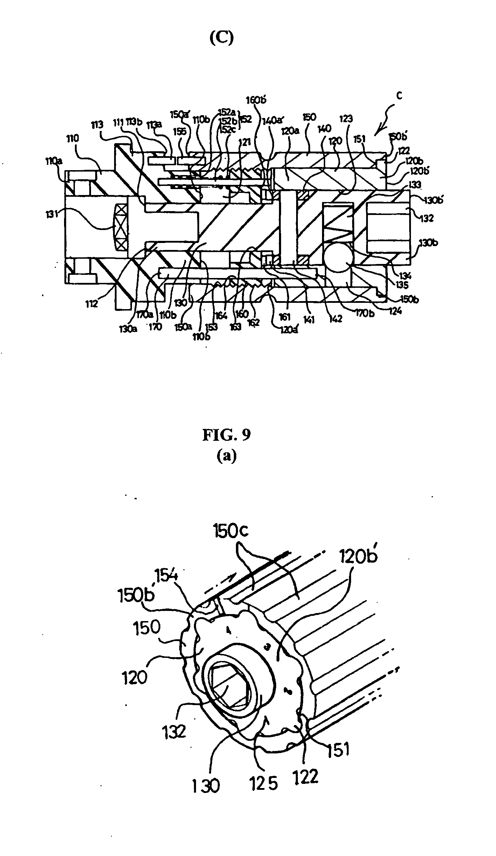

As shown in Fig. 9, it is preferable that a plurality of grooves (150c) are formed along the external periphery of the adjusting knob (150) for an operator's easy manipulation.

The first clutch (140) is externally fitted to a pin (142) and is fitted into one end (120a) of the interval maintaining part (120) substantially in the middle of the central axis (130), and has a first stopper (141) protruded from one end surface (140a') thereof.

Referring to Figs. 8b and 9b, if the adjusting knob (150) is grasped by the operator and is pushed to release the engagement of the protrusions (122) with the concaved parts (151), it can be rotated.

If the adjusting knob (150) is rotated or backlashes, the second clutch (160) moves back and forth in the space part (121) along the guide axis (170), and thus the interval with the first clutch (140) can be adjusted.

Then, if the adjusting knob (150) is released from the operator, the concaved parts (151) can be engaged with the protrusions (122) by the elastic support means (152), and therefore the adjusted interval between the first clutch (140) and the second clutch (160) can be maintained.

The elastic support means (152) comprises the concaved part (152a) formed in the other end (110b) of the coupling part (110); the spring holding rod (152b) with one end fixed into the bottom of the concaved part (152a) and the other end fixed on the end surface (120a') of the interval maintaining part (120) through the second clutch (160); and the springs (152c) provided in the concaved part (152a) and on both sides of the holding rod (152b) in the space part (121).

That is, as the second clutch (160) is screwed with the inside of the adjusting knob (15), the adjusting knob (150) can always be elastically supported by the second clutch (160) which is elastically supported by the elastic support means (152).

It is preferably that a plurality of elastic support means (152) are provided in the present invention to prevent the deterioration of the elasticity due to its use for a long time.

Like the guide axis (170), the holding rod (152b) also serves to guide the back and forth movement of the second clutch (160).

Along the external periphery of the coupling part (110), the protruding part (113) is formed to prevent the adjusting knob (150) from being excessively moved when the adjusting knob (150) is pushed by the operator to release the engagement of the protrusions (122) with the concaved parts (151).

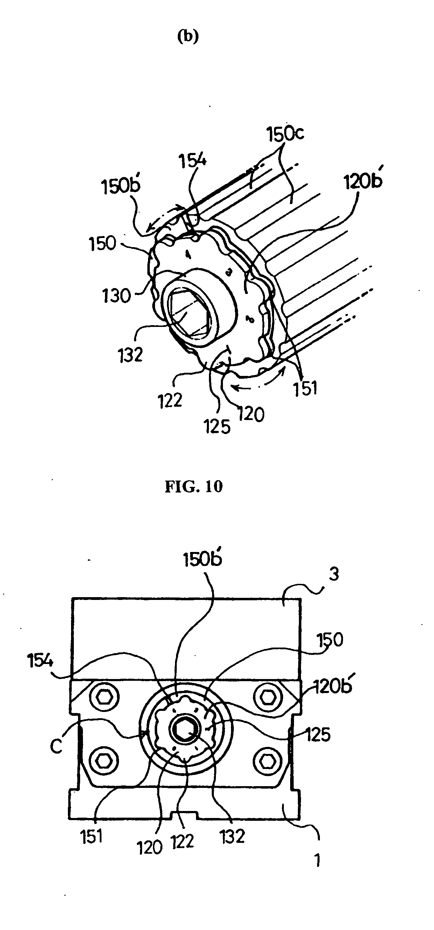

As shown in Figs. 9 and 10, on the other end surface (120b') of the interval maintaining part (120), the letters (125) indicating the distance between the first and the second clutches (140 and 160) are engraved and the grooves (154) indicating the engraved letters (125) are formed on the other end surface (150b') of the adjusting knob (150).

In rotating the adjusting knob (150), the protrusions (122) are brought to be engaged with the concaved parts (151) according to the letters (125) and the grooves (154), and accordingly the distance between the first and the second clutches (140 and 160) can be adjusted as desired.

Further, the upwardly inclined surface (141 a) is formed on the end surface of the first stopper (141) of the first clutch (140) in a clockwise direction, and the downwardly inclined surface (161a) is formed on the end surface of the second stopper (161) of the second clutch (160) to be in contact with the upwardly inclined surface (141a).

If the first clutch (140) comes in contact with the second clutch (160) by the rotation and forward movement of the central axis (130), the upwardly inclined surface (141a) comes in a sliding contact with the downwardly inclined surface (161a), and the first stopper (141) is smoothly engaged with the second stopper (161), which causes the central axis (130) not to rotate further and to stop forwarding.

Further, the bar (155) is protruded from one end (150a) of the adjusting knob (150) to prevent the excessive rotation of the adjusting knob (150). Also, the finger bar (113a) is protruded from the other end (113b) of the protruding part (113) so that the bar (155) can hang thereon.

That is, when it is desired to adjust the distance between the first and the second clutches (140 and 160) by the rotation of the adjusting knob (150), since the adjusting knob (150) rotates step by step within a given range by the bar (155)'s hanging on the finger bar (113a), even if the indicating letters (125) are erased due to the long time use, the operator can easily manipulate the rotation of the adjusting knob (150).

Then, the operation of the unit for adjusting clamping force (C) will be described hereinafter.

When the indicating grooves (154) of the adjusting knob (150) indicates "0" among the indicating letters (125) of the interval maintaining part (120), as shown in Fig. 11a, it means that the first clutch (140) is in contact with the second clutch (160), that is, the second stopper (161) is engaged with the first stopper (141).

At this time, if the protrusions (122) of the interval maintaining part (120) are brought to be engaged with the concaved parts (151) by rotating the adjusting knob (150), so that the groove (154) may indicate one of the indicating letters (125) "1" to "4", the second clutch (160) moves forward along the guide axis (170) as shown in Fig. 11b, and thus the first clutch (140) and the second clutch (160) become more distant. The distance between the first clutch (140) and the second clutch (160) increases step by step depending on how the adjusting knob (150) is rotated.

When the distance between the first clutch (140) and the second clutch (160) is adjusted, an object to be processed is placed on the base frame (1) of the vice (B). Then, by rotating the handle (8), the screw axis (5) is rotated and the movable jaw (3) advances forward to the fixed jaw (2) on the slider (4), and thus the object is temporarily held between the movable jaw (3) and the fixed jaw (2).

At this temporary holding state, if the handle (8) is further rotated, the ball (135) which has been suspending in the control groove (124) is pushed in the groove (133), elastically resisting against the ball spring (134) as shown in Fig. 11c, and thus the central axis (130) is rotated and advanced forward until the first clutch (140) comes in contact with the second clutch (160).

Accordingly, the first moving member (10) of the unit for increasing clamping force (P) which is in contact with the pressing part (131) moves forward as far as the distance that the central axis (130) moves forward, and by increasing the clamping force of the vice (B) as described above by the operation of the unit for increasing clamping force (P), the object which has temporarily been held between the fixed jaw (2) and the movable jaw (3) is held more strongly.

The increase of the clamping force by the unit for increasing clamping force (P) is proportional to the distance between the first and the second clutches (140 and 160). Therefore, it is possible to easily adjust the clamping force directed to the fixed jaw (2) from the movable jaw (3), by rotating the adjusting knob (150) appropriately depending on the object held between the fixed jaw (2) and the movable jaw (3).

Therefore, it can be prevented that the object held between the fixed jaw (2) and the movable jaw (3) is deformed or damaged due to an excessive clamping force. Also, the object can be held more strongly and efficiently between the fixed jaw (2) and the movable jaw (3) by the unit for increasing clamping force (P).

As described above, the unit for increasing clamping force for a vice does not make an object held by the vice to be easily deviated or detached from the vice even if a large external force is applied to the object. Thus, the precision machining can be done on the objects held by the vice having the unit for increasing and adjusting clamping force according to the present invention, and as a result, products with high precision can be obtained.

Also, as each of the rollers of the unit for increasing clamping force rollably moves through the first and the second slide bodies, the operational force of the first moving member can be sufficiently transferred to the second moving member and as a result the clamping force of the movable jaw against the fixed jaw can be efficiently increased.

Further, according to the unit for adjusting clamping force for a vice, the clamping force directed from the movable jaw to the fixed jaw, especially the force increased by the unit for increasing clamping force, can easily be adjusted depending on an object held between the movable jaw to the fixed jaw, and the deformation or damage of the object caused by the excessive clamping force can be prevented.

## Claims

1. A unit for adjusting clamping force for a vice comprising:
a coupling part (110) having one end (110a) fitted into an elongated end (5a) of a screw axis (5) of the vice (B) and also having an axial opening (112) with a jaw (111) along its internal periphery;
an interval maintaining part (120) having an axial opening (123) in the center thereof and also having one end (120a) connected to the coupling part (110) via a space part (121) and the other end (120b) having a plurality of protrusions (122) at the same interval along its external periphery;
a central axis (130) having one end (130a) rotatably and slidably fitted into the axial opening (112) of the coupling part (110) and the other end (130b) rotatably and slidably fitted into the axial opening (123) of the interval maintaining part (120), and including a pressing part (131) with its one end being inserted into the one end (130a) of the central axis (130) and the other end hanging on the jaw (111) of the axial opening (112);
a guide axis (170) having one end (170a) inserted into a groove formed in the other end (110b) of the coupling part (110) and the other end (170b) inserted into a groove formed in the one end (120a) of the interval maintaining part (120);
a first clutch (140) fitted into one end surface (120a') of the interval maintaining part (120) and having a first stopper (141) protruded from one end surface (140a') thereof;
an adjusting knob (150) having one end (150a) externally fitted to the other end (110b) of the coupling part (110) and the other end (150b) externally fitted to the interval maintaining part (120) to be rotatable and slidable, and including a plurality of concaved parts (151) formed at the same interval along the internal periphery of the other end (150b) to be engaged with the protrusions (122) of the interval maintaining part (120) by an elastic support means (152) and also including female screw (153) formed in its internal surface facing the space part (121) between the coupling part (110) and the interval maintaining part (120); and
a second clutch (160) provided in the adjusting knob (150) to be movable along the guide axis (170) and including an axial opening (163) into which the central axis (130) is rotatably and slidably fitted, a guide opening (164) into which the guide axis (170) is slidably inserted, a second stopper (161) protruded from one end surface (160b') and releasably engaged with the first stopper (141) of the first clutch (140), and a male screw (162) engaged with the female screw (153) of the adjusting knob (150).

2. A unit for adjusting clamping force for a vice as claimed in claim 1, wherein the elastic support means (152) comprises a concaved part (152a) formed in the other end (110b) of the coupling part (110) and including springs (152c) in a part thereof; a spring holding rod (152b) with one end fixed into the bottom of the concaved part (152a) and the other end fixed on the end surface (120a') of the interval maintaining part (120) through the second clutch (160); and the springs (152c) provided in the concaved part (152a) and on both sides of the holding rod (152b) in the space part (121).

3. A unit for adjusting clamping force for a vice as claimed in claim 1, wherein a groove (133) is formed in the other end (130b) of the central axis (130) and a ball (135) is inserted in the groove (133) to be elastically supported by a ball spring (134), and wherein the interval maintaining part (120) is provided with a control groove (124) in one side so that the ball (135) can be suspended on or released from the entrance of the control groove (124).

4. A unit for adjusting clamping force for a vice as claimed in claim 1, wherein an upwardly inclined surface (141a) in a clockwise direction is formed on an end surface of the first stopper (141) of the first clutch (140), and a downwardly inclined surface (161a) is formed on an end surface of the second stopper (161) of the second clutch (160) to be engaged with the upwardly inclined surface (141a).

5. A unit for adjusting clamping force for a vice as claimed in claim 1, wherein letters (125) indicating the distance between the first and the second clutches (140 and 160) step by step are engraved on the other end surface (120b') of the interval maintaining part (120), and grooves (154) indicating the engraved letters (125) are formed on the other end surface (150b') of the adjusting knob (150).

6. A unit for adjusting clamping force for a vice as claimed in any of claim 1 to claim 5, wherein in order to prevent the adjusting knob (150) from being excessively rotated beyond a predetermined range of adjustment, a bar (155) is protruded from one end (150a) of the adjusting knob (150), and a finger bar (113a) is protruded from the other end (113b) of a protruding part (113) formed along the outside of the coupling part (110) so that the bar (155) can hang thereon.

## Patentansprüche

1. Vorrichtung zum Einstellen der Klemmkraft für einen Schraubstock, welche aufweist:
einen Kupplungsteil (110) von dem ein Ende (110a) in ein verlängertes Ende (5a) einer Schraubenachse (5) des Schraubstocks (B) eingepasst ist und welcher Kupplungsteil weiters ein axiale Öffnung (112) mit einem Anschlag (111) entlang ihres inneren Umfangs aufweist;
einen Abstand-Erhaltungs-Teil (120) welcher eine axiale Öffnung (123) in dessen Mitte aufweist und der ebenfalls ein Ende (120a) aufweist, das über ein Freiraum (121) mit dem Kupplungsteil (110) verbunden ist und wobei das andere Ende (120b) eine Vielzahl von Vorsprüngen (122) im gleichen Abstand entlang seines Umfangs aufweist;
eine Mittelachse (130), dessen eine Ende (130a) in der axialen Öffnung (112) des Kupplungsteils (110) drehbar und verschiebbar eingepasst ist und dessen anderes Ende (130b) in die axiale Öffnung (123) des Abstand-Erhaltungs-Teils (120) drehbar und verschiebbar eingepasse ist, und welche Mittelachse einen Pressteil (131) beinhaltet, dessen ein Ende in das eine Ende (130a) der Mittelachse (130) eingesetzt ist und dessen anderes Ende an dem Anschlag (111) der axialen Öffnung (112) hängt;
eine Führungsachse (170) dessen eine Ende (170a) in eine Ausnehmung, die im anderen Ende (110b) des Kupplungsteils (110) ausgebildet ist, eingesetzt ist, und dessen anderes Ende (170b) in eine Ausnehmung, die im einen Ende (120a) des Abstand-Erhaltungs-Teils (120) ausgebildet ist, eingesetzt ist;
eine erste Kupplung (140), die in eine Endoberfläche (120a') des Abstand-Erhaltungs-Teils (120) eingepasst ist, und die einen ersten Begrenzungsanschlag (141) aufweist, der von einer Endoberfläche (140a') der Kupplung herausragt;
einen Einstelldrehknopf (150) dessen eine Ende (150a) an das andere Ende (110b) des Kupplungsteils (110) außenseitig angepasst ist und dessen anderes Ende (150b) an den Abstand-Erhaltungs-Teil (120) außenseitig rotierbar und verschiebbar angepasst ist, und welcher Einstelldrehknopf eine Vielzahl von Hohlabschnitten (151) beinhaltet, die im gleichen Abstand entlang des inneren Umfangs des anderen Endes (150b) ausgebildet sind, um, mit Hilfe eines elastischen Stützmittels (152), im Eingriff mit den Vorsprüngen (122) des Abstand-Erhaltungs-Teils (120) zu sein und der Einstelldrehknopf auch ein Innengewinde (153) aufweist, welches auf der inneren Oberfläche, dem Freiraum (121) zugewandt, zwischen dem Kupplungsteil (110) und dem Abstand-Erhaltungs-Teil (120) ausgebildet ist; und
eine zweite Kupplung (160), die in dem Einstelldrehknopf (150) entlang der Führungsachse (170) bewegbar vorgesehen ist und die eine axiale Öffnung (163), in die die Mittelachse (130) drehbar und verschiebbar eingepasst ist, eine Führungsöffnung (164), in die die Führungsachse 170 verschiebbar eingesetzt ist, einen, von einer Endoberfläche (160b') herausragenden und mit dem ersten Begrenzungsanschlag (141) der ersten Kupplung (140) in lösbarem Eingriff stehenden, zweiten Begrenzungsanschlag (161), und ein Außengewinde (162), das mit dem Innengewinde (153) des Einstelldrehknopfes (150) in Eingriff steht beinhaltet.

2. Vorrichtung zum Einstellen der Klemmkraft für einen Schraubstock nach Anspruch 1, wobei das elastische Stützmittel (152) einen in das andere Ende (110b) des Kupplungsteils (110) eingeformten Hohlteil (152a) aufweist und in einem Teil davon Federn (152c) beinhaltet; weiters einen Federhalter-Stab (152b) dessen eine Ende in dem Boden des Hohlteils (152a) befestigt ist und dessen anderes Ende, durch die zweite Kupplung (160) hindurchgehend an der Endoberfläche (120a') des Abstand-Erhaltungs-Teils (120) befestigt ist; und die Federn (152c) in dem Hohlteil (152a) und an beiden Seiten des Federhalter-Stabs (152b) in dem Freiraum (121) vorgesehen sind.

3. Vorrichtung zum Einstellen der Klemmkraft für einen Schraubstock nach Anspruch 1, wobei eine Ausnehmung (133) in dem anderen Ende (130b) der Mittelachse (130) gebildet ist und eine Kugel (135) so in die Ausnehmung (133) eingesetzt ist, dass sie elastisch von einer Kugelfeder (134) gestützt wird, und wobei der Abstand-Erhaltungs-Teil (120) in einer Seite mit einer Führungs-Ausnehmung (124) versehen ist, so dass die Kugel (135) in die Öffnung der Führungs-Ausnehmung (124) eingehängt, oder aus dieser gelöst werden kann.

4. Vorrichtung zum Einstellen der Klemmkraft für einen Schraubstock nach Anspruch 1, wobei eine in Aufwärtsrichtung geneigte Oberfläche (141a) im Uhrzeigersinn an einer Endoberfläche des ersten Begrenzungsanschlags (141) von der ersten Kupplung (140) ausgebildet ist, und eine in Abwärtsrichtung geneigte Oberfläche (161a) auf einer Endoberfläche des zweiten Begrenzungsanschlags (161) von der zweiten Kupplung (160) ausgebildet ist, um mit der in Aufwärtsrichtung geneigten Oberfläche (141a) in Eingriff zu sein.

5. Vorrichtung zum Einstellen der Klemmkraft für einen Schraubstock nach Anspruch 1, wobei Beschriftungen (125), welche die Distanz zwischen der ersten und der zweiten Kupplung (140 und 160) Schritt für Schritt angeben, auf der anderen Endoberfläche (120b') des Abstand-Erhaltungs-Teils (120) eingraviert sind, und Kerben (154), die die eingravierten Buchstaben (125) markieren auf der anderen Endoberfläche (150b') des Einstelldrehknopfes (150) ausgebildet sind.

6. Vorrichtung zum Einstellen der Klemmkraft für einen Schraubstock nach einem der Ansprüche 1 bis 5, wobei ein Riegel (155) von einem Ende (150a) des Einstelldrehknopfes (150) herausragt und ein Greifriegel (113a) von dem anderen Ende (113b) eines Vorstehteils (113), welches entlang der Außenseite des Kupplungsteils (110) geformt ist, herausragt, so dass der Riegel (155) daran hängen bleiben kann, um zu verhindern, dass der Einstelldrehknopf (150) übermäßig über einen vorbestimmten Einstellbereich hinausgedreht wird.

## Revendications

1. Unité d'ajustement de la force de serrage d'un étau, comprenant :
une pièce d'accouplement (110) ayant une extrémité (110a) fixée dans l'extrémité prolongée (5a) d'un axe fileté (5) de l'étau (B) et ayant aussi une ouverture axiale (112) avec un mors (111) le long de sa périphérie intérieure ;
une pièce de maintien d'intervalle (120) ayant une ouverture axiale (123) en son centre et ayant aussi une extrémité (120a) raccordée à la pièce d'accouplement (110) à l'aide d'une entretoise (121) et l'autre extrémité (120b) ayant une pluralité de saillies (122) au même intervalle le long de sa périphérie extérieure ;
un axe central (130) ayant une extrémité (130a) placée dans l'ouverture centrale (112) de la pièce d'accouplement (110) de manière à pouvoir tourner et coulisser et l'autre extrémité (130b) placée dans l'ouverture axiale (123) de la pièce de maintien d'intervalle (120) de manière à pouvoir tourner et coulisser, et incluant une pièce de pression (131) dont l'une des extrémités est insérée dans ladite une extrémité (130a) de l'axe central (130) et dont l'autre extrémité accroche au mors (111) de l'ouverture axiale (112) ;
un axe de guidage (170) ayant une extrémité (170a) insérée dans une rainure usinée dans l'autre extrémité (110b) de la pièce d'accouplement (110) et son autre extrémité (170b) insérée dans une rainure usinée dans ladite une extrémité (120a) de la pièce de maintien d'intervalle (120) ;
un premier embrayage (140) fixé dans l'une des surfaces d'extrémité (120a') de la pièce de maintien d'intervalle (120) et ayant un premier bouchon (141) saillant d'une surface d'extrémité (140a') de celui-ci ;
un bouton d'ajustement (150) ayant une extrémité (150a) fixée à l'extérieur de l'autre extrémité (110b) de la pièce d'accouplement (110) et son autre extrémité (150b) placée à l'extérieur de la pièce de maintien d'intervalle (120) de manière à pouvoir tourner et coulisser, et incluant une pluralité de parties concaves (151) usinées au même intervalle le long de la périphérie intérieure de l'autre extrémité (150b) pour être engrenées avec les saillies (122) de la pièce de maintien d'intervalle (120) par un moyen élastique de support (152) et incluant aussi un filet femelle (153) usiné dans sa surface intérieure face à l'entretoise (121) entre la pièce d'accouplement (110) et la pièce de maintien d'intervalle (120) ; et
un second embrayage (160) prévu dans le bouton d'ajustement (150) qui doit être déplaçable le long de l'axe de guidage (170) et incluant une ouverture axiale (163) dans laquelle l'axe central (130) est placé d'une manière à pouvoir tourner et coulisser, une ouverture de guidage (164) dans laquelle l'axe de guidage (170) est inséré de manière à pouvoir coulisser, un second bouchon (161) saillant de l'une des surfaces d'extrémité (160b') et étant en prise avec le premier bouchon (141) du premier embrayage (140) de façon à pouvoir être dégagé, et un filet mâle (162) étant en prise avec le filet femelle (153) du bouton d'ajustement (150).

2. Unité d'ajustement de la force de serrage d'un étau selon la revendication 1, dans laquelle le moyen élastique de support (152) comprend une partie concave (152a) usinée dans l'autre extrémité (110b) de la pièce d'accouplement (110) et incluant des ressorts (152c) dans une des parties de celle-ci ; une tige de maintien de ressort (152b) avec une extrémité fixée dans le fond de la partie concave (152a) et l'autre extrémité fixée à la surface d'extrémité (120a') de la pièce de maintien d'intervalle (120) par l'intermédiaire du second embrayage (160) ; et les ressorts (152c) prévus dans la partie concave (152a) et des deux côtés de la tige de maintien (152b) dans l'entretoise (121).

3. Unité d'ajustage de la force de serrage d'un étau selon la revendication 1, dans laquelle une rainure 153 est usinée dans l'autre extrémité (130b) de l'axe central (130) et une bille (135) est insérée dans la rainure (133) pour être supportée élastiquement par un ressort de bille (134), et dans laquelle la pièce de maintien d'intervalle (120) est prévue avec une rainure de réglage (124) dans un côté, de sorte que la bille (135) peut être suspendue à ou dégagée de l'entrée de la rainure de réglage (124).

4. Unité d'ajustement de la force de serrage d'un étau selon la revendication 1, dans laquelle une surface inclinée vers le haut (141a) dans le sens des aiguilles d'une montre est usinée sur une surface d'extrémité du premier bouchon (141) du premier embrayage (140), et une surface inclinée vers le bas (161a) est usinée sur une surface d'extrémité du second bouchon (161) du second embrayage (160) pour se mettre en prise avec la surface inclinée ascendante (141a).

5. Unité d'ajustement de la force de serrage d'un étau selon la revendication 1, dans laquelle des lettres (125) indiquant la distance entre les deux embrayages (140 et 160) pas à pas sont gravées sur l'autre surface d'extrémité (120b') de la pièce de maintien d'intervalle (120), et des rainures (154) indiquant les lettres gravées (125) sont usinées sur l'autre surface d'extrémité (150b') du bouton d'ajustement (150).

6. Unité d'ajustement de la force de serrage d'un étau selon l'une quelconque des revendications 1 à 5, dans laquelle, pour empêcher que le bouton d'ajustement (150) ne soit tourné excessivement au-delà d'une gamme d'ajustements prédéterminée, une barre (155) est saillante d'une extrémité (150a) du bouton d'ajustement (150), et une barre en forme de doigt (113a) dépasse de l'autre extrémité d'une partie saillante usinée le long de l'extérieur de la pièce d'accouplement (110) de sorte que la barre (155) puisse s'y accrocher.
